Europäisches Patentamt

European Patent Office

Office européen des brevets

(19)

(11) **EP 1 452 343 A1**

## (12) EUROPEAN PATENT APPLICATION
published in accordance with Art. 158(3) EPC

(43) Date of publication:
01.09.2004 Bulletin 2004/36

(21) Application number: 02788706.6

(22) Date of filing: 03.12.2002

(51) Int Cl.⁷: **B60C 9/20**, B60C 9/18

(86) International application number:
**PCT/JP2002/012627**

(87) International publication number:
**WO 2003/047885 (12.06.2003 Gazette 2003/24)**

(84) Designated Contracting States:
**AT BE BG CH CY CZ DE DK EE ES FI FR GB GR
IE IT LI LU MC NL PT SE SI SK TR**

(30) Priority: 03.12.2001 JP 2001369125
03.12.2001 JP 2001369130

(71) Applicant: **Kabushiki Kaisha Bridgestone
Chuo-ku, Tokyo 104-8340 (JP)**

(72) Inventor: **HARA, Hisakatsu
c/o Kabushiki Kaisha Bridgestone
Kodaira-shi, Tokyo 187-8531 (JP)**

(74) Representative: **Whalley, Kevin et al
MARKS & CLERK,
57-60 Lincoln's Inn Fields
London WC2A 3LS (GB)**

(54) **BELT PACKAGE AND PNEUMATIC TIRE**

(57) A belt package including at least three belt layers for use in a pneumatic tire, wherein the filament tensile strength of the steel cord/steel filament of the outermost belt layer on the tread side is made 5 % or more lower than the filament tensile strength of the steel cord/ steel filament of an intermediate belt layer adjacent to the above outermost belt layer to make the ductility of one or both of the outermost belt layer and the innermost belt layer higher than the ductility of at least an intermediate belt layer adjacent to the above belt layer. Thereby, required tensile strength is secured and bending resistance and cut resistance are improved.

EP 1 452 343 A1

**Description**

Background of the Invention

[Field of the Invention]

The present invention relates to a belt package comprising steel cords for reinforcing a rubber article and to a pneumatic tire which comprises steel cords for reinforcing a rubber article as a reinforcement.

[Description of the Prior Art]

A steel cord used to reinforce the belt package of a pneumatic tire needs high strength, and a steel cord obtained by intertwining a plurality of steel filaments is widely used.
A conventional steel cord comprises filaments having substantially the same tensile strength, and a steel cord used in the outermost belt layer (layer most close to the tread) and the innermost belt layer (layer most close to the inner liner) has almost the same tensile strength as a steel cord used in an intermediate layer or the main cross layer when they have almost the same filament diameter.
Even when they have different filament diameters, those having almost the same tensile strength Z in terms of filament diameter are used.

$$Z = TS/(238.7 + 937.2 \times \phi - 3699.1 \times \phi^2 + 3417.8 \times \phi^3) \tag{1}$$

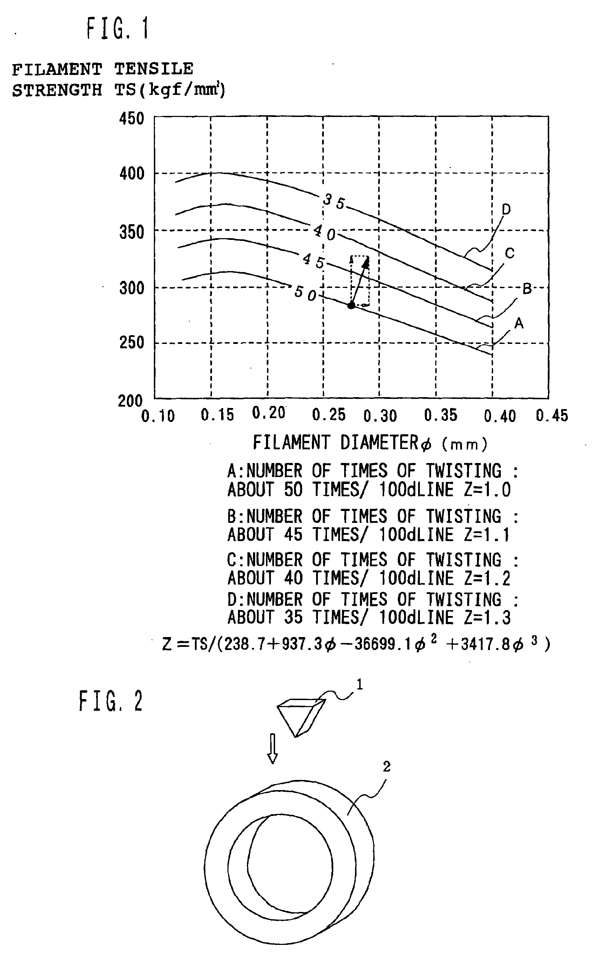

wherein $\phi$ is the diameter (mm) of a sheath filament(filament in the case of single twisting or single filament) and TS is the tensile strength of the sheath filament (kgf/mm$^2$).
As shown in the graph of Fig. 1, the ductility of a filament represented by a twisting value (the number of times of twisting before breakage in a twisting test based on the length of a filament which is 100 times the diameter d of the filament, that is, a value based on 100d) tends to decrease as the tensile strength of the filament becomes higher and the diameter of the filament becomes larger. More specifically, the twisting value decreases by about 5 times/100d as the tensile strength of the filament rises by about 10 %.
Even when filaments having different diameters $\phi$ are used, if their tensile strengths TS and $\phi$ satisfy the following equation (2), their twisting values become almost equal to each other.

$$TS = (238.7 + 937.2 \times \phi - 3699.1 \times \phi^2 + 3417.8 \times \phi^3) \tag{2}$$

Therefore, when the tensile strength Z in terms of filament diameter represented by the above equation (1) is larger than 1 (Z > 1), the ductility of the filament decreases and when the tensile strength is smaller than 1 (Z < 1), the ductility increases.
The belt layer for reinforcing a belt package needs high tensile strength to secure required plunger energy but also bending resistance and cut resistance. To improve the bending resistance and cut resistance, the ductility of a steel cord/steel filament for forming the belt layer must be increased. However, when the ductility of the steel cord/ steel filament of each belt layer is increased, the tensile strength lowers, thereby making it impossible to secure required plunger energy.
It is an object of the present invention which has been made in view of the problem of the prior art to provide a belt package having required tensile strength and excellent bending resistance and cut resistance as well as a pneumatic tire whose durability can be improved at a low cost.

Summary of the Invention

The inventor of the present invention has conducted intensive studies to solve the above problem and have found that the durability of a pneumatic tire can be improved by using a steel cord/steel filament having bending resistance and cut resistance if the steel cord/steel filament of the belt layer(s) of the outermost layer and/or the innermost layer retains a certain degree of tensile strength. The present invention has been accomplished based on this finding.
That is, according to a first aspect of the present invention, there is provided a belt package for use in a pneumatic tire, which includes at least three belt layers, wherein the ductility of one or both of the outermost belt layer on the tread side and the innermost belt layer on the inner liner side is made higher than the ductility of at least an

# EP 1 452 343 A1

intermediate belt layer adjacent to the above belt layer. Thereby, a belt package which retains required tensile strength and has excellent cut resistance can be obtained.

According to a second aspect of the present invention, there is provided a belt package, wherein the filament tensile strength of the steel cord/steel filament of the outermost belt layer is made 5 % or more lower than the filament tensile strength of the steel cord/steel filament of an intermediate belt layer adjacent to the outermost belt layer.

According to a third aspect of the present invention, there is provided a belt package, wherein the filament tensile strength of the steel cord/steel filament of the outermost belt layer is made 5 to 15 % lower than the filament tensile strength of the steel cord/steel filament of an intermediate belt layer adjacent to the outermost belt layer.

According to a fourth aspect of the present invention, there is provided a belt package, wherein the carbon content of the steel cord/steel filament of the outermost belt layer is made 0.05 wt% or more lower than the carbon content of the steel cord/steel filament of an intermediate belt layer adjacent to the outermost belt layer.

According to a fifth aspect of the present invention, there is provided a belt package, wherein the carbon content of the steel cord/steel filament of the outermost belt layer is made 0.05 to 0.15 wt% lower than the carbon content of the steel cord/steel filament of an intermediate belt layer adjacent to the outermost belt layer.

According to a sixth aspect of the present invention, there is provided a belt package, wherein the carbon content of the steel cord/steel filament of the outermost belt layer is 0.7 to 0.75 wt% and the carbon content of the steel cord/steel filament of an intermediate belt layer adjacent to the outermost belt layer is 0.8 to 0.85 wt%.

According to a seventh aspect of the present invention, there is provided a belt package, wherein the filament tensile strength of the steel cord/steel filament of the innermost belt layer is made 5 % or more lower than the filament tensile strength of the steel cord/steel filament of an intermediate belt layer adjacent to the innermost belt layer.

According to an eighth aspect of the present invention, there is provided a belt package, wherein the filament tensile strength of the steel cord/steel filament of the innermost belt layer is made 5 to 15 % lower than the filament tensile strength of the steel cord/steel filament of an intermediate belt layer adjacent to the innermost belt layer.

According to a ninth aspect of the present invention, there is provided a belt package, wherein the carbon content of the steel cord/steel filament of the innermost belt layer is 0.05 wt% or more lower than the carbon content of the steel cord/steel filament of an intermediate belt layer adjacent to the innermost belt layer.

According to a tenth aspect of the present invention, there is provided a belt package, wherein the carbon content of the steel cord/steel filament of the innermost belt layer is 0.05 to 0.15 wt% lower than the carbon content of the steel cord/steel filament of an intermediate belt layer adjacent to the innermost belt layer.

According to an eleventh aspect of the present invention, there is provided a belt package, wherein the carbon content of the steel cord/steel filament of the innermost belt layer is 0.7 to 0.75 wt% and the carbon content of the steel cord/steel filament of an intermediate belt layer adjacent to the innermost belt layer is 0.8 to 0.85 wt%.

According to a twelfth aspect of the present invention, there is provided a belt package, wherein the tensile strength in terms of filament diameter represented by the following equation (1) of the sheath filament of the outermost layer of a steel cord for forming the outermost belt layer is made 5 % or more lower than the tensile strength in terms of filament diameter of the sheath filament of the outermost layer of a steel cord for forming an intermediate belt layer adjacent to the outermost belt layer:

$$\text{Tensile strength Z in terms of filament diameter} =$$

$$TS/(238.7 + 937.2 \times \phi - 3699.1 \times \phi^2 + 3417.8 \times \phi^3) \tag{1}$$

wherein $\phi$ is the filament diameter (mm) of the sheath filament (filament in the case of single twisting or single filament) and TS is the tensile strength ($kgf/mm^2$) of the sheath filament.

According to a thirteenth aspect of the present invention, there is provided a belt package, wherein the tensile strength in terms of filament diameter of the sheath filament of the outermost layer of a steel cord for forming the outermost belt layer is made 5 to 15 % lower than the tensile strength in terms of filament diameter of the sheath filament of the outermost layer of a steel cord for forming an intermediate belt layer adjacent to the outermost belt layer.

According to a fourteenth aspect of the present invention, there is provided a belt package, wherein the tensile strength in terms of filament diameter represented by the above equation (1) of the sheath filament of the outermost layer of a steel cord for forming the innermost belt layer is made 5 % or more lower than the tensile strength in terms of filament diameter of the sheath filament of the outermost layer of a steel cord for forming an intermediate belt layer adjacent to the innermost belt layer.

According to a fifteenth aspect of the present invention, there is provided a belt package, wherein the tensile strength in terms of filament diameter of the sheath filament of the outermost layer of a steel cord for forming the innermost belt layer is made 5 to 15 % lower than the tensile strength in terms of filament diameter of the sheath

3

filament of the outermost layer of a steel cord for forming an intermediate belt layer adjacent to the innermost belt layer.

According to a sixteenth aspect of the present invention, there is provided a belt package, wherein steel cords having the same filament diameter and twist structure or steel filaments having the same filament diameter are used in all the belt layers of the belt package, and the filament tensile strength of the steel cord/steel filament of one or both of the outermost belt layer and the innermost belt layer is made 5 % or more lower than the filament tensile strength of the steel cord/steel filament of the main cross belt layer.

According to a seventeenth aspect of the present invention, there is provided a belt package, wherein the filament tensile strength of the steel cord/steel filament of the outermost layer and/or the innermost layer is made 5 to 15 % lower than the filament tensile strength of the steel cord/steel filament of the main cross belt layer.

According to an eighteenth aspect of the present invention, there is provided a belt package, wherein the carbon content of the steel cord/steel filament of one or both of the outermost belt layer on the tread side and the innermost belt layer on the inner liner side is made 0.05 wt% or more lower than the carbon content of the steel cord/ steel filament of the main cross belt layer.

According to a nineteenth aspect of the present invention, there is provided a belt package, wherein the carbon content of the steel cord/steel filament of the outermost layer and/or the innermost layer is made 0.05 to 0.15 wt% lower than the carbon content of the steel cord/steel filament of the main cross belt layer.

According to a twentieth aspect of the present invention, there is provided a belt package, wherein the carbon content of the steel cord/steel filament of the outermost layer and/or the innermost layer is 0.7 to 0.75 wt% and the carbon content of the steel cord/steel filament of the main cross belt layer is 0.8 to 0.85 wt%.

According to a twenty-first aspect of the present invention, there is provided a belt package, wherein the tensile strength in terms of filament diameter represented by the above equation (1) of the sheath filament of the outermost layer of a steel cord for forming one or both of the outermost belt layer and the innermost belt layer is made 5 % or more lower than the tensile strength in terms of filament diameter of the sheath filament of the outermost layer of a steel cord for forming the main cross belt layer.

According to a twenty-second aspect of the present invention, there is provided a belt package, wherein the tensile strength in terms of filament diameter of the sheath filament of the outermost layer of a steel cord for forming the outermost belt layer and/or the innermost belt layer is made 5 to 15 % lower than the tensile strength in terms of filament diameter of the sheath filament of the outermost layer of a steel cord for forming the main cross belt layer.

According to a twenty-third aspect of the present invention, there is provided a pneumatic tire comprising the belt package of any one of the first to twenty-second aspects.

Brief Description of the Drawings

Fig. 1 is a graph showing the relationship among the twisting value, diameter and tensile strength of a filament; and
Fig. 2 is a diagram for explaining the method of evaluating cut resistance.

Description of the Preferred Embodiment

A preferred embodiment of the present invention will be described with reference to the accompanying drawings.

Taking a TBR tire having a 4-belt structure as a belt package for use in a pneumatic tire as an example, it is second and third belts called "cross layer" corresponding to the intermediate layers of a belt package that need high tensile strength to secure required plunger energy. The innermost layer (first belt) needs bending resistance and the outermost layer (fourth belt) needs cut resistance. That is, since the innermost belt layer (inner liner side) has a relatively small drive angle in the tire, that is, a relatively small angle from a ply cord, a steel cord/steel filament used in this innermost belt layer is more subjected to compressive strain than the reinforcing fibers of other belt layers and therefore, bending resistance is important. However, the above innermost belt layer has a smaller tension load in the peripheral direction of the belt than a belt layer having a relatively large angle between the reinforcing fibers including the steel cord and the ply cord, that is, the main cross layer. Therefore, the innermost belt layer needs not so high tensile strength as the main cross layer.

Meanwhile, since a steel cord/steel filament used in the outermost belt layer (tread side) is more subjected to cutting from the outside than the reinforcing fibers of other belt layers, its cut resistance is very important. That is, it needs high ductility as a filament.

To cope with this, in this embodiment, the filament tensile strength of the steel cord/steel filament (to be referred to as "cord" hereinafter) used in the outermost belt layer on the tread side is made 5 to 15 % lower than the filament tensile strength of the cord of an intermediate belt layer adjacent to the outermost belt layer, and the filament tensile strength of the innermost belt layer on the inner liner side is made 5 to 15% lower than the filament tensile strength of the cord of an intermediate belt layer adjacent to the innermost belt layer to maintain high pull strength in order to secure required plunger energy as a belt package, and the ductility of the innermost belt layer and the ductility of the outermost belt layer are increased to improve both bending resistance and cut resistance.

As means of making a difference in filament tensile strength between cords, it is conceivable to change the composition and heat treatment conditions of a steel material or drawing conditions. In this embodiment, the carbon content of a cord used in the outermost layer is made 0.05 to 0.15 wt% lower than the carbon content of a cord used in an intermediate belt layer adjacent to the outermost layer to make a difference of 5 to 15 % between the filament tensile strength of the cord of the outermost layer and the filament tensile strength of the cord of the intermediate layer adjacent to the outermost layer.

To change the carbon content of the cord, only a raw material (steel material) to be charged for the manufacture of the cord may be changed. Therefore, this is efficient. Out of high carbon steels which are used in large quantities, a high carbon steel having a carbon content of 0.70 to 0.75 wt% for the outermost layer and a high-carbon steel having a carbon content of 0.80 to 0.85 wt% for an intermediate belt layer adjacent to the outermost layer can be acquired at a relatively low cost and economical. In addition, since the processing speed of a cord in the drawing step can be accelerated as the filament tensile strength of the cord becomes lower, it is possible to manufacture the cord at a lower cost and further cut the cost of a belt package.

To ensure the improvement of target ductility, in consideration of variations in twisting value, the filament tensile strength must be reduced by 5 % or more. When a reduction in filament tensile strength is larger than 15 %, its influence upon the tensile strength of the whole belt cannot be ignored. Therefore, a reduction in filament tensile strength is desirably 5 to 15 %.

The filament tensile strength of a cord used in the innermost belt layer is made 5 to 15 % lower than the filament tensile strength of a cord used in an intermediate belt layer adjacent to the innermost layer in the same manner as described above.

Thereby, the tensile strength of a belt package can be retained and its bending resistance and cut resistance can be improved. Consequently, the durability of a pneumatic tire can be improved at a low cost by using the above belt package in the pneumatic tire.

In the above embodiment, a belt package for use in a four-belt structured TBR tire has been described. The present invention is not limited to this and may be applied to a pneumatic tire comprising a belt package having three belt layers or five or more belt layers.

In the above embodiment, a difference of 5 to 15 % is made between the filament tensile strength of the steel cord/steel filament of the outermost or innermost belt layer and the filament tensile strength of the steel cord/steel filament of an intermediate belt layer adjacent to the above outermost or innermost belt layer. When the filament tensile strength of the steel cord/steel filament of one of the outermost and innermost belt layers is made 5 to 15 % lower than the filament tensile strength of the steel cord/steel filament of an intermediate belt layer adjacent to the above layer, the durability of a pneumatic tire can be fully improved.

When there are five or more belt layers, steel cords having the same filament diameter and the same twisting structure or steel filaments having the same filament diameter are used in all the belt layers, and the filament tensile strength of one or both of the steel cord/steel filament of the outermost belt layer and the steel cord/steel filament of the innermost belt layer may be 5 % or more, desirably 5 to 15 % lower than the filament tensile strength of the steel cord/steel filament of the main cross belt layer.

Alternatively, when the tensile strength in terms of filament diameter represented by the above equation (1) of the sheath filament of the outermost layer of a steel cord for forming the outermost belt layer and/or the innermost belt layer may be 5 to 15 % lower than the tensile strength in terms of filament diameter of the sheath filament of the outermost layer of a steel cord for forming an intermediate belt layer adjacent to the above layer, the same effect can be obtained.

When there are five or more belt layers, if the tensile strength in terms of filament diameter of the sheath filament of the outermost layer of a steel cord for forming one or both of the outermost belt layer and the innermost belt layer is made 5 % or more lower than the tensile strength in terms of filament diameter of the sheath filament of the outermost layer of a steel cord for forming the main cross belt layer, the same effect can be obtained.

<Examples>

The following examples and comparative examples are provided for the purpose of further illustrating the present invention but are in no way to be taken as limiting.

A high carbon steel material having a carbon content of about 0.82 wt% and a diameter of about 5.5 mm was drawn in a dry state repeatedly until its diameter became about 1.86 mm and subjected to patenting and brass plating to prepare a wire material which was then subjected to multi-stage slip type wet drawing until its diameter became about 0.34 mm. The thus prepared steel filaments were twisted together in a 1+6 structure to manufacture a steel cord (cord A). A steel cord was manufactured from a high carbon steel material having a carbon content of about 0.72 wt% and a diameter of about 5.5 mm in the same manner as above and designated as cord B.

The winding rate of the multi-state slip type wet drawn cord was 800 mm/min for the cord A and 900 mm/min for the cord B.

The tensile strength of the cord A was about 1,960 N and the tensile strength of the cord B was about 1,800 N which was about 92 % of that of the cord A.

The twisting test results of filaments constituting the cord A and the cord B are shown in Table 1. The cord B was superior to the cord A in ductility.

Table 1

| | TWISTING VALUE | |
|---|---|---|
| | TIMES/100d | [INDEX] |
| FILAMENT OF CORD A | 33.2 | 100 |
| FILAMENT OF CORD B | 38.1 | 115 |

The evaluation results of pneumatic tires trially manufactured by using the cord A and the cord B as a belt cord are shown in Table 2 below. The trially manufactured and evaluated tires had a rib pattern having a size of 11R22.5.

Bending resistance was evaluated based on the number of unbent cords when the number of cords for each belt was made 30 % that of a normal belt to set conditions under which compressive strain was easily applied to the belt, a free durable drum was caused to run the whole distance, and the cords of one belt (innermost layer) were taken out and observed.

Cut resistance was evaluated in the same manner as plunger energy by preparing a test pin 1 having a regular triangular section as shown in Fig. 2 and contacting the test pin 1 to the surface of a tire 2 at a predetermined pressure to compare breaking energy.

Table 2

| | | EXAMPLE 1 | EXAMPLE 2 | EXAMPLE 3 | COMPARATIVE EXAMPLE 1 | COMPARATIVE EXAMPLE 2 |
|---|---|---|---|---|---|---|
| BELT CORD | FIRST BELT (INNER SIDE) | B | B | A | A | B |
| | SOCOND BELT | A | A | A | A | B |
| | THIRD BELT | A | A | A | A | B |
| | FOURTH BELT (OUTER SIDE) | B | A | B | A | B |
| PLUNGER ENERGY [INDEX] | | 100 | 100 | 100 | 100 | 85 |
| BENDING RESISTANCE [INDEX] | | 400 | 400 | 100 | 100 | 400 |
| CUT RESISTANCE [INDEX] | | 110 | 100 | 110 | 100 | 110 |

As obvious from Table 2, it was confirmed that the tires of the present invention maintain the same plunger energy as a prior art product shown in Comparative Example 1 and have improved durability even when a belt cord having high ductility is used in both the outermost belt layer and the innermost belt layer (Example 1) and a belt cord having high ductility is used in only one of the outermost layer and the innermost layer (Examples 2 and 3). A tire comprising a belt cord having high ductility in all the belt layers (Comparative Example 2) had improved durability but could not secure required plunger energy due to a reduction in tensile strength.

Industrial Feasibility

As described above, according to the present invention, in a belt package consisting of at least three belt layers, the filament tensile strength of the steel cord/steel filament of one or both of the outermost belt layer and the innermost belt layer is made 5 % or more lower than the filament tensile strength of the steel cord/steel filament of an intermediate belt layer adjacent to the above layer to make the ductility of the outermost belt layer or the innermost belt layer or both of them higher than the ductility of at least an intermediate belt layer (main cross layer) adjacent to the above belt layer.

Therefore, a belt package which retains required tensile strength and has excellent bending resistance and cut resistance can be obtained and the durability of a pneumatic tire can be improved at a low cost.

## Claims

1.   A belt package for use in a pneumatic tire, which includes at least three belt layers, wherein the ductility of one or both of the outermost belt layer on the tread side and the innermost belt layer on the inner liner side is made higher than the ductility of at least an intermediate belt layer adjacent to the above belt layer.

2.   The belt package of claim 1, wherein the filament tensile strength of the steel cord/steel filament of the outermost belt layer is made 5 % or more lower than the filament tensile strength of the steel cord/steel filament of an intermediate belt layer adjacent to the outermost belt layer.

3.   The belt package of claim 2, wherein the filament tensile strength of the steel cord/steel filament of the outermost belt layer is made 5 to 15 % lower than the filament tensile strength of the steel cord/steel filament of an intermediate belt layer adjacent to the outermost belt layer.

4.   The belt package of claim 1, wherein the carbon content of the steel cord/steel filament of the outermost belt layer is made 0.05 wt% or more lower than the carbon content of the steel cord/steel filament of an intermediate belt layer adjacent to the outermost belt layer.

5.   The belt package of claim 4, wherein the carbon content of the steel cord/steel filament of the outermost belt layer is made 0.05 to 0.15 wt% lower than the carbon content of the steel cord/steel filament of an intermediate belt layer adjacent to the outermost belt layer.

6.   The belt package of claim 5, wherein the carbon content of the steel cord/steel filament of the outermost belt layer is 0.7 to 0.75 wt% and the carbon content of the steel cord/steel filament of an intermediate belt layer adjacent to the outermost belt layer is 0.8 to 0.85 wt%.

7.   The belt package of claim 1, wherein the filament tensile strength of the steel cord/steel filament of the innermost belt layer is made 5 % or more lower than the filament tensile strength of the steel cord/steel filament of an intermediate belt layer adjacent to the innermost belt layer.

8.   The belt package of claim 7, wherein the filament tensile strength of the steel cord/steel filament of the innermost belt layer is made 5 to 15 % lower than the filament tensile strength of the steel cord/steel filament of an intermediate belt layer adjacent to the innermost belt layer.

9.   The belt package of claim 7, wherein the carbon content of the steel cord/steel filament of the innermost belt layer is 0.05 wt% or more lower than the carbon content of the steel cord/steel filament of an intermediate belt layer adjacent to the innermost belt layer.

10.   The belt package of claim 9, wherein the carbon content of the steel cord/steel filament of the innermost belt layer is 0.05 to 0.15 wt% lower than the carbon content of the steel cord/steel filament of an intermediate belt layer adjacent to the innermost belt layer.

11.   The belt package of claim 10, wherein the carbon content of the steel cord/steel filament of the innermost belt layer is 0.7 to 0.75 wt% and the carbon content of the steel cord/steel filament of an intermediate belt layer adjacent to the innermost belt layer is 0.8 to 0.85 wt%.

12. The belt package of claim 1, wherein the tensile strength in terms of filament diameter represented by the following equation of the sheath filament of the outermost layer of a steel cord for forming the outermost belt layer is made 5 % or more lower than the tensile strength in terms of filament diameter of the sheath filament of the outermost layer of a steel cord for forming an intermediate belt layer adjacent to the outermost belt layer:

Tensile strength Z in terms of filament diameter =

$$TS/(238.7 + 937.2 \times \phi - 3699.1 \times \phi^2 + 3417.8 \times \phi^3)$$

wherein $\phi$ is the filament diameter (mm) of the sheath filament (filament in the case of single twisting or single filament) and TS is the tensile strength (kgf/mm$^2$) of the sheath filament.

13. The belt package of claim 12, wherein the tensile strength in terms of filament diameter of the sheath filament of the outermost layer of a steel cord for forming the outermost belt layer is made 5 to 15 % lower than the tensile strength in terms of filament diameter of the sheath filament of the outermost layer of a steel cord for forming an intermediate belt layer adjacent to the outermost belt layer.

14. The belt package of claim 1, wherein the tensile strength in terms of filament diameter represented by the following equation of the sheath filament of the outermost layer of a steel cord for forming the innermost belt layer is made 5 % or more lower than the tensile strength in terms of filament diameter of the sheath filament of the outermost layer of a steel cord for forming an intermediate belt layer adjacent to the innermost belt layer:

Tensile strength Z in terms of filament diameter =

$$TS/(238.7 + 937.2 \times \phi - 3699.1 \times \phi^2 + 3417.8 \times \phi^3)$$

wherein $\phi$ is the filament diameter (mm) of the sheath filament (filament in the case of single twisting or single filament) and TS is the tensile strength (kgf/mm$^2$) of the sheath filament.

15. The belt package of claim 14, wherein the tensile strength in terms of filament diameter of the sheath filament of the outermost layer of a steel cord for forming the innermost belt layer is made 5 to 15 % lower than the tensile strength in terms of filament diameter of the sheath filament of the outermost layer of a steel cord for forming an intermediate belt layer adjacent to the innermost belt layer.

16. The belt package of claim 1, wherein steel cords having the same filament diameter and twist structure or steel filaments having the same filament diameter are used in all the belt layers of the belt package, and the filament tensile strength of the steel cord/steel filament of one or both of the outermost belt layer and the innermost belt layer is made 5 % or more lower than the filament tensile strength of the steel cord/steel filament of the main cross belt layer.

17. The belt package of claim 16, wherein the filament tensile strength of the steel cord/steel filament of the outermost layer and/or the innermost layer is made 5 to 15 % lower than the filament tensile strength of the steel cord/steel filament of the main cross layer.

18. The belt package of claim 16, wherein the carbon content of the steel cord/steel filament of one or both of the outermost belt layer on the tread side and the innermost belt layer on the inner liner side is made 0.05 wt% or more lower than the carbon content of the steel cord/steel filament of the main cross belt layer.

19. The belt package of claim 18, wherein the carbon content of the steel cord/steel filament of the outermost layer and/or the innermost layer is made 0.05 to 0.15 wt% lower than the carbon content of the steel cord/steel filament of the main cross belt layer.

20. The belt package of claim 19, wherein the carbon content of the steel cord/steel filament of the outermost layer and/or the innermost layer is 0.7 to 0.75 wt% and the carbon content of the steel cord/steel filament of the main cross belt layer is 0.8 to 0.85 wt%.

21. The belt package of claim 1, wherein the tensile strength in terms of filament diameter represented by the following equation of the sheath filament of the outermost layer of a steel cord for forming one or both of the outermost belt layer and the innermost belt layer is made 5 % or more lower than the tensile strength in terms of filament diameter of the sheath filament of the outermost layer of a steel cord for forming the main cross belt layer:

Tensile strength Z in terms of filament diameter =

$$TS/(238.7 + 937.2 \times \phi - 3699.1 \times \phi^2 + 3417.8 \times \phi^3)$$

wherein $\phi$ is the filament diameter (mm) of the sheath filament (filament in the case of single twisting or single filament) and TS is the tensile strength (kgf/mm$^2$) of the sheath filament.

22. The belt package of claim 21, wherein the tensile strength in terms of filament diameter of the sheath filament of the outermost layer of a steel cord for forming the outermost belt layer and/or the innermost belt layer is made 5 to 15 % lower than the tensile strength in terms of filament diameter of the sheath filament of the outermost layer of a steel cord for forming the main cross belt layer.

23. A pneumatic tire comprising the belt package of any one of claims 1 to 22.

## FIG. 1

FILAMENT TENSILE
STRENGTH TS(kgf/mm²)

FILAMENT DIAMETERφ (mm)

A:NUMBER OF TIMES OF TWISTING :
ABOUT 50 TIMES/ 100dLINE Z=1.0

B:NUMBER OF TIMES OF TWISTING :
ABOUT 45 TIMES/ 100dLINE Z=1.1

C:NUMBER OF TIMES OF TWISTING :
ABOUT 40 TIMES/ 100dLINE Z=1.2

D:NUMBER OF TIMES OF TWISTING :
ABOUT 35 TIMES/ 100dLINE Z=1.3

$$Z = TS/(238.7 + 937.3\phi - 36699.1\phi^2 + 3417.8\phi^3)$$

## FIG. 2

## INTERNATIONAL SEARCH REPORT

| International application No. |
| --- |
| PCT/JP02/12627 |

**A. CLASSIFICATION OF SUBJECT MATTER**
Int.Cl$^7$ B60C9/20, 9/18

According to International Patent Classification (IPC) or to both national classification and IPC

**B. FIELDS SEARCHED**

Minimum documentation searched (classification system followed by classification symbols)
Int.Cl$^7$ B60C9/20, 9/18, 9/00

Documentation searched other than minimum documentation to the extent that such documents are included in the fields searched

| | | | |
| --- | --- | --- | --- |
| Jitsuyo Shinan Koho | 1926-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 10-217712 A (The Yokohama Rubber Co., Ltd.),<br>18 August, 1998 (18.08.98),<br>Claims; Par. Nos. [0011], [0012]; table 1<br>(Family: none) | 1,23<br>2-22 |
| X<br>A | US 4446905 A (BRIDGESTONE TIRE CO., LTD.),<br>08 May, 1984 (08.05.84),<br>Page 4, column 3, line 45 to column 4, line 46;<br>table 1<br>& JP 57-80908 A | 1,23<br>2-22 |
| X<br>A | US 5688344 A (BRIDGESTONE CORP.),<br>18 November, 1997 (18.11.97),<br>Tables 1, 2<br>& JP 7-17211 A | 1,23<br>2-22 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>20 February, 2003 (20.02.03) | Date of mailing of the international search report<br>04 March, 2003 (04.03.03) |
| --- | --- |
| Name and mailing address of the ISA/<br>Japanese Patent Office | Authorized officer |
| Facsimile No. | Telephone No. |

Form PCT/ISA/210 (second sheet) (July 1998)

11

**INTERNATIONAL SEARCH REPORT**

International application No.

PCT/JP02/12627

C (Continuation). DOCUMENTS CONSIDERED TO BE RELEVANT

| Category* | Citation of document, with indication, where appropriate, of the relevant passages | Relevant to claim No. |
|---|---|---|
| X<br>A | EP 655352 A1 (BRIDGESTONE CORP.),<br>28 November, 1994 (28.11.94),<br>Page 14, lines 1 to 23; table 6<br>& JP 7-242102 A | 1,23<br>2-22 |
| A | JP 11-81165 A (BRIDGESTONE CORP.),<br>26 March, 1999 (26.03.99),<br>Full text<br>(Family: none) | 1-23 |
| A | JP 11-59122 A (BRIDGESTONE CORP.),<br>02 March, 1999 (02.03.99),<br>Full text<br>(Family: none) | 1-23 |

Form PCT/ISA/210 (continuation of second sheet) (July 1998)